# EUROPEAN PATENT SPECIFICATION

(11) **EP 3 757 929 B1**
(45) Date of publication and mention of the grant of the patent: **06.12.2023**
(21) Application number: 18911962.1
(22) Date of filing: 27.03.2018
(51) Int. Cl.: G06Q 30/06, G06Q 10/06, G06Q 10/02, A01D 34/00

(54) **CONTROL DEVICE FOR SHARING SERVICE, CONTROL METHOD, AND PROGRAM**
STEUERUNGSVORRICHTUNG FÜR GEMEINSAME DIENSTNUTZUNG, STEUERUNGSVERFAHREN UND PROGRAMM
DISPOSITIF DE COMMANDE D'UN SERVICE DE PARTAGE, PROCÉDÉ DE COMMANDE ET PROGRAMME

(43) Date of publication of application: 30.12.2020
(73) Proprietor: HONDA MOTOR CO., LTD., Minato-ku Tokyo 107-8556 (JP)
(72) Inventor: KURIYAGAWA, Koji, Wako-shi, Saitama 351-0193 (JP); DOBASHI, Manabu, Wako-shi, Saitama 351-0193 (JP); YAMAKAWA, Hiroshi, Wako-shi, Saitama 351-0193 (JP)
(74) Representative: Beder, Jens
(86) International application number: PCT/JP2018/012359
(87) International publication number: WO 2019/186684

(56) References cited:
- EP-A1- 2 926 642
- WO-A1-2017/064202
- WO-A1-2017/186096
- JP-A- H05 297 942
- JP-A- 2003 325 090
- JP-A- 2004 348 482
- JP-A- 2008 108 107
- JP-A- 2016 520 899
- JP-A- 2017 127 292
- US-A1- 2014 330 456

## Description

### TECHNICAL FIELD

The present invention relates to a sharing service control device, control method, and program.

### BACKGROUND ART

Rental services for various types of equipment, such as wheel chairs and cultivators, are being provided. Japanese Patent Laid-Open No. 2017-072883 discloses a system for providing a wheel chair rental service. In this system, the rental state of each wheel chair is managed using a database. When a rental request is received, the system refers to this database to specify a wheel chair that can be rented out, and rents out the wheel chair.

WO 2017/186096 A1 discloses a tool sharing platform comprising a borrowing information input module, a lending information input module, a supply demand matching module and a borrowing management module. By seeking a borrowing account and a lending account with a borrowing condition and a lending condition matching each other by means of the supply demand matching module, and by generating a borrowing protocol of a tool for the borrowing account and the lending account matching each other by the borrowing management module, and tracking a borrowing event of the tool, the case of lack of communication between a demand and the supply of the tool and the inability to realize resource sharing of the tool are avoided, and interoperability and mutual benefit of the total resource can be achieved. Also provided is a tool applicable to a sharing platform, avoiding the case where a supplier fails to monitor a usage condition of a tool during a lending/borrowing process. Also provided is a self moving robot applicable to a sharing platform, capable of automatically altering an electronic map according to an order condition.
EP 2 926 642 A1 discloses an out autonomous travel work system working, regarding a work area as a canvas and applying an arbitrary design to the work area, according to the design. The autonomous travel work system includes an information terminal configured to be input means and transmit input information, a computer configured to receive the input information, and at least one electric lawnmower configured to work autonomously travelling in the work area. The information terminal will includes a display means, a work ground input means, a design allocation input means, and a work request means. The information terminal or the computer includes a work ground designation means, a design allocation means, a mapping route generation means, and a work pattern generation means.

### SUMMARY OF INVENTION

### TECHNICAL PROBLEM

In a rental service such as that disclosed in PTL1, a piece of equipment cannot be rented out to another requester until the piece of equipment is returned to the rental service provider. Meanwhile, sharing services for sharing equipment among a plurality of users are also gaining popularity. Pieces of equipment owned by individuals are shared in sharing services, and thus, transportation of equipment to specific rental service providers is unnecessary. One aspect of the present invention provides a technique for efficiently providing a sharing service.

### SOLUTION TO PROBLEM

Some embodiments provide a control device for providing a work machine sharing service, characterized by including: request acquiring means for acquiring a work machine rental request that specifies a desired date and time and a desired location; schedule acquiring means for acquiring a scheduled date and time of work of each of a plurality of work machines; and specifying means for specifying a work machine that can be rented out from among the plurality of work machines, based at least on the request and the scheduled date and time. The control device further comprises fee determining means for determining a rental fee for a specific time period based on a number of requests during the time period; and providing means for acquiring map information regarding the desired location from a work machine which collects map information during work and has finished work at the desired location, and providing the map information to another work machine that later carries out work at the desired location.

### ADVANTAGEOUS EFFECTS OF INVENTION

According to one aspect of the present invention, a technique for efficiently providing a sharing service is provided.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings are included in and constitute a part of the specification, and the accompanying drawings illustrate an embodiment of the present invention and are used, along with the description thereof, to explain the principles of the present invention.
FIG. 1 is a block diagram describing an example configuration of a sharing service-providing system according to an embodiment of the present invention.
FIG 2 is a block diagram describing example configurations of devices in the system according to the embodiment of the present invention.
FIG 3 is a flowchart describing one example of a control method for the system according to the embodiment of the present invention.
FIG 4 is a diagram describing a table used in the system according to the embodiment of the present invention.

### DESCRIPTION OF EMBODIMENT

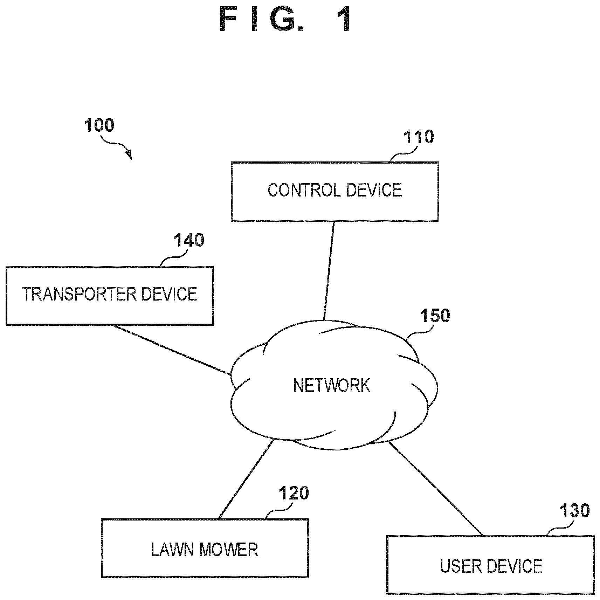

With reference to FIG 1, an example configuration of a system 100 for providing a work machine sharing service pertaining to some embodiments will be described. The work machine sharing service (simply referred to in the following as "service") is a service in which an owner of a work machine rents out the work machine that the owner owns upon request from others. The owner can use the work machine that the owner owns for themself. A person making a rental request for a work machine is referred to as a requester. People using the service (owners and requesters) are referred to as users of the service. An owner of a work machine may be an individual or a rental service provider.

A work machine is a machine that carries out a predetermined type of work. A work machine may be an automatic work machine. An automatic work machine is an apparatus that carries out work without real-time instructions from a user. An automatic work machine may carry out work according to a predetermined procedure. An automatic work machine may be a self-propelled automatic work machine. A self-propelled automatic work machine may also be called an unmanned work vehicle. In the following, a mobile lawn mower that carries out lawn mowing will be described as one example of an unmanned work vehicle.

The system 100 includes a control device 110, a lawn mower 120, a user device 130, and a transporter device 140. These elements are capable of communicating with one another via a network 150. The network 150 may be a public network such as the Internet, for example, or may be a private network. The control device 110 performs general operations for providing the service. The details of the operations of the control device 110 will be described later.

The lawn mower 120 autonomously travels within a predetermined work area and carries out work (lawn mowing). The work area may be defined by an area laid out in advance with wire, or may be defined as an area on map data. While FIG 1 illustrates one lawn mower 120, the system 100 typically includes a plurality of lawn mowers 120.

The user device 130 is a device owned by a user of the system, and is used for communication with the control device 110. While FIG 1 illustrates one user device 130, the system 100 typically includes a plurality of user devices 130. The transporter device 140 is a device used by a transporter. The transporter transports the lawn mower 120 from the owner thereof to a requester, and returns the lawn mower 120 after work is finished. The transporter may also transport the lawn mower 120 from one requester to another.

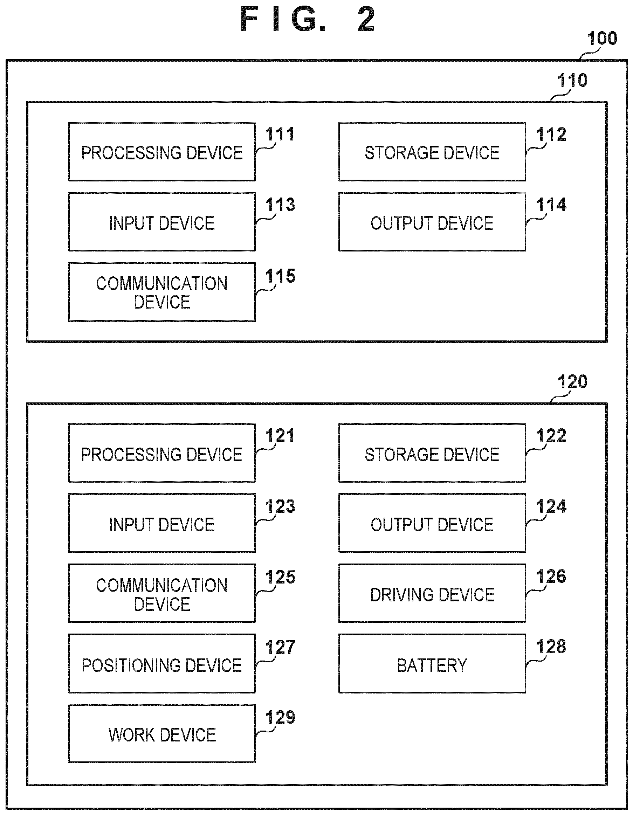

With reference to FIG 2, example hardware configurations of devices included in the system 100 will be described. The control device 110 includes a processing device 111, a storage device 112, an input device 113, an output device 114, and a communication device 115. The processing device 111 is a device that executes processing performed by the control device 110, and is constituted of a processor such as a CPU, for example. The storage device 112 is a device for storing data for performing processing by the control device 110, and includes a main storage device that is constituted of a memory such as a RAM or a ROM, for example, and an auxiliary storage device that is constituted of a hard disk, etc. The input device 113 is a device for receiving input from a user of the control device 110 (for example, an administrator of the system 100), and is constituted of a keyboard, a mouse, etc., for example. The output device 114 is a device for presenting information to the user of the control device 110, and is constituted of a liquid crystal display, a speaker, etc., for example. The input device 113 and the output device 114 may be constituted of a single device such as a touch screen. The communication device 115 is a device for allowing the control device 110 to connect to the network 150, and is constituted of a network card, etc., if wired communication is performed, and constituted of an antenna, a signal processing circuit, etc., if wireless communication is performed.

The user device 130 and the transporter device 140 may each have a configuration similar to that of the control device 110, and overlapping description is thus omitted. The user device 130 may be a mobile terminal such as a portable telephone or a smartphone, or may be a stationary computer such as a personal computer.

The lawn mower 120 includes a processing device 121, a storage device 122, an input device 123, an output device 124, a communication device 125, a driving device 126, a positioning device 127, a battery 128, and a work device 129. The processing device 121 is a device that executes processing performed by the lawn mower 120, and is constituted of a processor such as a CPU, for example. The storage device 122 is a device for storing data for performing processing by the lawn mower 120, and is constituted of a memory such as a RAM or a ROM, for example. The processing device 121 updates the data stored in the storage device 122 based on user input performed via the input device 123 and information received from the control device 110. In addition, the processing device 121 controls displaying performed by the output device 124 and controls operations performed by the work device 129 by executing instructions included in programs stored in the storage device 122. When executing such control, the processing device 121 uses various types of data read from the storage device 122 and data acquired from various sensors mounted to the lawn mower 120.

The input device 123 is a device for receiving input from users of the lawn mower 120, and is constituted of a touch panel, buttons, etc., for example. The output device 124 is a device for presenting information to users of the lawn mower 120, and is constituted of a liquid crystal display, a speaker, etc., for example. The input device 123 and the output device 124 may be constituted of a single device such as a touch screen. The communication device 125 is a device for allowing the lawn mower 120 to connect to the network 150, and is constituted of an antenna, a signal processing circuit, etc.

The driving device 126 is a device for allowing the lawn mower 120 to travel autonomously, and is constituted of a travel motor, a pair of left and right front wheels 13, and a pair of left and right rear wheels, for example. The positioning device 127 is a device for measuring the geographic position of the lawn mower 120, and is constituted of a GPS sensor, for example. The battery 128 supplies electricity to the elements of the lawn mower 120. The work device 129 is a device for performing work (lawn mowing) performed by the lawn mower 120, and is constituted of a rotor, a lawn-mowing blade attached to the rotor, and a work motor for causing the rotor to rotate, for example.

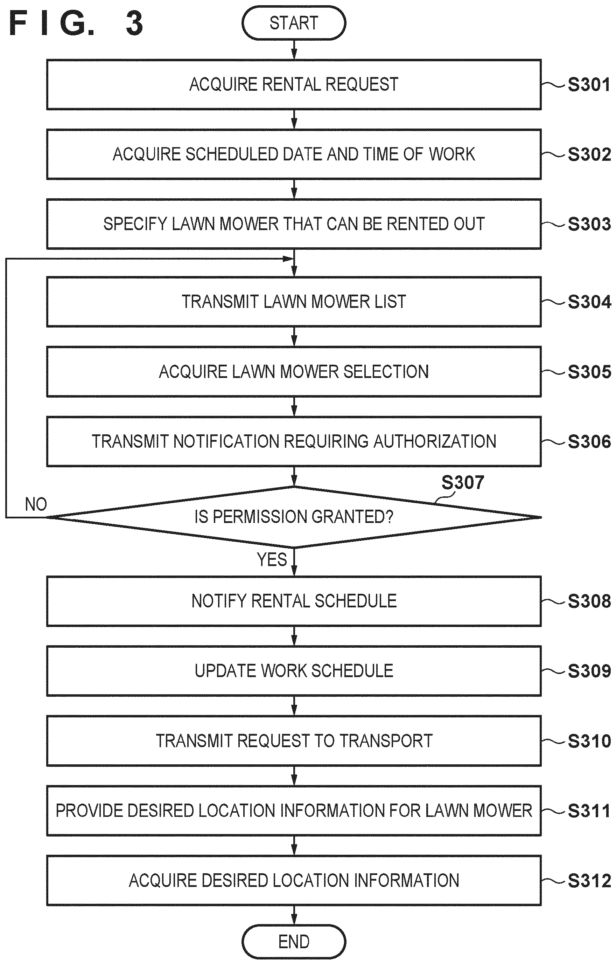

With reference to FIG 3, one example of processing in a lawn mower sharing service will be described. This processing is executed by the control device 110, lawn mowers 120, the user device 130, and the transporter device 140 cooperating with one another. Processing by the control device 110 is performed by the processing device 111 reading a program stored in the storage device 112 and executing instructions included in the program. This similarly applies to the lawn mowers 120, the user device 130, and the transporter device 140.

In step S301, the control device 110 acquires a rental request for a lawn mower 120. This request specifies a desired location and a desired date and time of work. The requester can use the requester's user device 130 to transmit this request to the control device 110. As the data and time of work, a starting time and an ending time, such as 10 a.m. to 4 p.m. tomorrow, may be specified, only the amount of time, such as any two hours later than the current time, may be specified, or a plurality of time periods, such as 10 a.m. to 12 p.m. every Monday, may be specified.

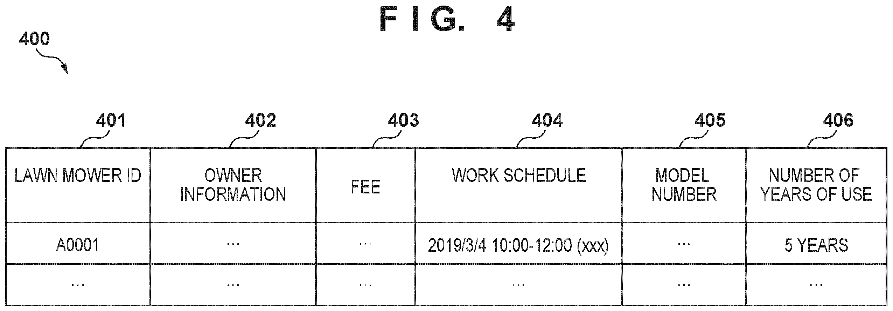

In step S302, the control device 110 acquires the scheduled date and time of work of each of a plurality of lawn mowers 120 registered to the service. The control device 110 manages information regarding the plurality of lawn mowers 120 registered to the service using a table 400 illustrated in FIG 4, for example. The table 400 is stored in the storage device 112. A lawn mower ID 401 is information for uniquely identifying a lawn mower 120. Owner information 402 is information regarding the owner of a lawn mower 120, and includes contact information of the owner, for example. A fee 403 is the rental fee of a lawn mower 120. A work schedule 404 includes a date and time and a location at which a lawn mower 120 is scheduled to carry out work. The work schedule 404 may include a plurality of dates and times, and the work location may differ for each date and time. A model number 405 is the model number of a lawn mower 120. The number of years of use 406 is the number of years that have passed since a lawn mower 120 was manufactured.

An owner using the service uses a user device 130 to notify the control device 110 of the owner's owner information 402, and the model number 405 and the number of years of use 406 of a lawn mower 120. Furthermore, the owner uses the user device 130 to notify the control device 110 of a work schedule of work for which the owner will use the lawn mower 120 themself. The control device 110 stores such information to the table 400 in a state in which the information is associated with a lawn mower ID 401 allocated to the owner. The owner can update the work schedule 404 as desired. Information regarding lawn mowers 120, such as the model number 405 and the number of years of use 406 of lawn mowers 120, can be notified to the control device 110 by dealers or maintenance/inspection service providers of lawn mowers 120 rather than by owners.

Fees 403 may be set by the control device 110 rather than by owners. For example, the control device 110 may determine a rental fee for a specific time period based on the number of requests during the time period. For example, the control device 110 may set rental fees so that the price is higher for time periods (for example, from 2 p.m. to 3 p.m.) during which many requests are made. Alternatively, the control device 110 may set rental fees based on model numbers 405 and the number of years of use 406. For example, the control device 110 may set high rental fees for high-performance lawn mowers 120 and new lawn mowers 120.

In step S303, the control device 110 specifies lawn mowers 120 that can be rented out from among the plurality of lawn mowers 120, at least based on the request acquired in step S301 and the scheduled dates and times acquired in step S302. Specifically, for each lawn mower 120 managed using the table 400, the control device 110 calculates the time required for transportation to the desired location from the previous work location, which is the work location immediately before the desired date and time, and determines whether or not the lawn mower 120 can be transported to the desired location from the previous work location before the scheduled date and time. The previous work location may be indicated in a work schedule 404 read from the table 400, or may be the current position of the lawn mower 120 acquired by the positioning device 127 of the lawn mower 120. Similarly, the control device 110 calculates the time required for transportation from the desired location to the scheduled work location immediately after the desired date and time, and determines whether or not the lawn mower 120 can be transported from the desired location to the immediately-subsequent scheduled work location before the scheduled date and time. If such transportation is possible, the control device 110 determines that the lawn mower 120 can be rented out. In this determination, the time required for the work at the desired location may be also taken into consideration.

In step S304, the control device 110 transmits a list of the specified lawn mowers 120 to the requester. This list may include fees 403, model numbers 405, and the number of years of use 406. The requester can check this list using the requester's user device 130.

In step S305, the control device 110 acquires a selection of a lawn mower 120 from the requester. The requester selects one of the lawn mowers 120 in the list. In step S306, the control device 110 transmits, to the owner of the selected lawn mower 120, a notification asking for permission to rent out the lawn mower 120.

In step S307, the control device 110 determines whether or not the owner has granted permission to rent out the lawn mower 120. If permission to rent out the lawn mower 120 is granted (YES in step S307), the control device 110 advances processing to step S308, and if permission to rent out the lawn mower 120 is not granted, the control device 110 returns processing to step S304. In step S304, the control device 110 transmits, to the requester, a list from which the lawn mower 120 for which permission was not granted has been excluded.

In step S308, the control device 110 notifies the requester of the rental schedule. In step S309, the control device 110 updates the work schedule 404 in the table 400 for the selected lawn mower 120.

In step S310, the control device 110 transmits, to the transporter via the transporter device 140, a request to transport the lawn mower 120 to the desired location. The transporter retrieves the lawn mower 120 from the previous scheduled location and transports the lawn mower 120 to the desired location before the beginning of the desired date and time. In addition, the transporter retrieves the lawn mower 120 from the desired location after the work by the lawn mower 120 is finished, and transports the lawn mower 120 to the next scheduled location. If the next scheduled location is undecided, the transporter may transport the lawn mower 120 to the owner of the lawn mower 120.

The transportation of the lawn mower 120 may be carried out by an automatically-traveling vehicle rather than by the transporter. In this case, in step S303, the control device 110 specifies lawn mowers that can automatically board and alight from the automatically-traveling vehicle. Furthermore, in step S310, the control device 110 instructs the automatically-traveling vehicle to transport a lawn mower 120 to the desired location. The automatically-traveling vehicle travels to the previous scheduled location of the lawn mower 120 so as not to be late for the beginning of the desired date and time. When the automatically-traveling vehicle arrives, the lawn mower 120 automatically boards the automatically-traveling vehicle. When the automatically-traveling vehicle arrives at the desired location, the lawn mower 120 automatically alights from the automatically-traveling vehicle and starts work.

In step S311, the control device 110 determines whether information regarding the desired location is stored in the storage device 112, and provides such information, if stored, to the selected lawn mower 120. The information regarding the desired location includes, for example, a slip ratio that occurred during work, the positions of obstacles, a map of the site, etc. The lawn mower 120 can use this information to improve the work efficiency of the lawn mower 120. The lawn mower 120 collects such information during the current work as well. For example, the lawn mower 120 may acquire area boundaries by tracing the grounds of the work area or may acquire an image of the work area using a camera (unillustrated) provided in the lawn mower 120, and may transmit such information to the control device 110. The control device 110 may create a map of the work area by analyzing the image.

In step S312, the control device 110 acquires information regarding the desired location from the lawn mower 120 having finishing the work at the desired location, and stores the information to the storage device 112 in a state in which the information is associated with the desired location. As described above, this information to provided (in step S311) to lawn mowers 120 that later carry out work at the desired location.

In the above-described example, the requester selects a lawn mower 120 from a list. Alternatively, the control device 110 may select, from among the lawn mowers 120 that can be rented out, the work machine for which the time required for transportation to the desired location is shortest as the work machine to be rented out.

## Claims

1. A control device for providing a work machine sharing service, comprising:
request acquiring means for acquiring a work machine rental request that specifies a desired date and time and a desired location;
schedule acquiring means for acquiring a scheduled date and time of work of each of a plurality of work machines;
specifying means for specifying a work machine that can be rented out 15 from among the plurality of work machines, based at least on the request and the scheduled date and time; and
fee determining means for determining a rental fee for a specific time period based on a number of requests during the time period; and
providing means for acquiring map information regarding the desired 20 location from a work machine which collects map information during work and has finished work at the desired location, and providing the map information to another work machine that later carries out work at the desired location.

2. The control device according to claim 1, wherein the 25 specifying means specifies a work machine that can be rented out also based on a time required for transportation of work machines to the desired location and a time required for work at the desired location.

3. The control device according to claim 1 or 2, wherein 30 if map information regarding the desired location is not present, a work machine carrying out work at the desired location executes work of acquiring map information regarding the desired location.

4. The control device according to any one of claims 1 to 3, further comprising selecting means for selecting, from among work machines that can be rented out, a work machine for which the time required for transportation to the desired location is shortest as a work machine to be rented out.

5. The control device according to any one of claims 1 to 4, further comprising transmitting means for transmitting, to a transporter, a request to transport a work machine to the desired location.

6. The control device according to any one of claims 1 to 4, further comprising instructing means for instructing an automatically-traveling vehicle to transport a work machine to the desired location.

7. The control device according to claim 6, wherein the specifying means specifies a work machine that can automatically board and alight from the automatically-traveling vehicle.

8. A control method for providing a work machine sharing service, comprising:
acquiring a work machine rental request that specifies a desired date and time and a desired location;
acquiring a scheduled date and time of work of each of a plurality of work machines;
specifying a work machine that can be rented out from among the plurality of work machines, based at least on the request and the scheduled date and time; and
determining a rental fee for a specific time period based on a number of requests during the time period; and
acquiring map information regarding the desired location from a work machine which collects map information during work and has finished work at the desired location, and providing the map information to another work machine that later carries out work at the desired location.

9. A program for causing a computer to function as each means of the control device according to any one of claims 1 to 7.

## Patentansprüche

1. Steuervorrichtung zum Bereitstellen eines Dienstes für die gemeinsame Nutzung von Arbeitsmaschinen, aufweisend:
eine Anforderungserfassungseinrichtung zum Erfassen einer ein gewünschtes Datum und eine gewünschte Uhrzeit sowie einen gewünschten Ort angebenden Mietanfrage für eine Arbeitsmaschine;
eine Zeitplanerfassungseinrichtung zum Erfassen eines geplanten Datums und einer geplanten Uhrzeit für die Arbeit einer jeden aus einer Mehrzahl an Arbeitsmaschinen;
eine Spezifizierungseinrichtung zum Spezifizieren, aus der Mehrzahl an Arbeitsmaschinen, einer mietbaren Arbeitsmaschine, zumindest auf der Grundlage der Anfrage, des geplanten Datums und der geplanten Uhrzeit; und
eine Gebührenbestimmungseinrichtung zum Bestimmen einer Mietgebühr für eine bestimmte Zeitspanne auf der Grundlage einer Anzahl von Anfragen während dieser Zeitspanne; und
eine Bereitstellungseinrichtung zum Erfassen von Karteninformationen bezüglich des gewünschten Ortes von einer während der Arbeit Karteninformationen sammelnden Arbeitsmaschine, welche die Arbeit an dem gewünschten Ort beendet hat, und zum Bereitstellen der Karteninformationen an eine andere, an dem gewünschten Ort zu einem späteren Zeitpunkt Arbeit ausführende Arbeitsmaschine.

2. Steuervorrichtung nach Anspruch 1, wobei die Spezifizierungseinrichtung eine Arbeitsmaschine spezifiziert, die auch auf der Grundlage einer für den Transport von Arbeitsmaschinen zu dem gewünschten Ort erforderlichen Zeit sowie einer für die Arbeit an dem gewünschten Ort erforderlichen Zeit, vermietet werden kann.

3. Steuervorrichtung nach Anspruch 1 oder 2, wobei eine an dem gewünschten Ort Arbeit ausführende Arbeitsmaschine Arbeit zur Erfassung von Karteninformationen über den gewünschten Ort ausführt, wenn keine Karteninformationen über den gewünschten Ort vorhanden sind.

4. Steuervorrichtung nach einem der Ansprüche 1 bis 3, ferner aufweisend eine Auswahleinrichtung, um unter den zu vermietenden Arbeitsmaschinen diejenige Arbeitsmaschine als zu vermietende Arbeitsmaschine auszuwählen, bei der die für den Transport zum gewünschten Ort erforderliche Zeit am kürzesten ist.

5. Steuervorrichtung nach einem der Ansprüche 1 bis 4, ferner aufweisend eine Übertragungseinrichtung zum Übertragen einer Transportanfrage an einen Transporteur, eine Arbeitsmaschine an den gewünschten Ort zu transportieren.

6. Steuervorrichtung nach einem der Ansprüche 1 bis 4, ferner aufweisend eine Anweisungseinrichtung, die ein selbstfahrendes Fahrzeug anweist, eine Arbeitsmaschine an den gewünschten Ort zu transportieren.

7. Steuervorrichtung nach Anspruch 6, wobei die Spezifizierungseinrichtung eine Arbeitsmaschine spezifiziert, welche das selbstfahrende Fahrzeug autonom befahren und wieder verlassen kann.

8. Steuerungsverfahren zum Bereitstellen eines Dienstes für die gemeinsame Nutzung von Arbeitsmaschinen, aufweisend die folgenden Schritte:
Erfassen einer ein gewünschtes Datum und eine gewünschte Uhrzeit sowie einen gewünschten Ort angebende Mietanfrage für eine Arbeitsmaschine;
Erfassen eines geplanten Datums und einer geplanten Uhrzeit für die Arbeit einer jeden aus der Mehrzahl an Arbeitsmaschinen;
Spezifizieren, aus der Mehrzahl an Arbeitsmaschinen, einer mietbaren Arbeitsmaschine, zumindest auf der Grundlage der Anfrage und des geplanten Datums sowie der Uhrzeit; und
Bestimmen einer Mietgebühr für eine bestimmte Zeitspanne auf der Grundlage einer Anzahl von Anfragen während dieser Zeitspanne; und
Erfassen von Karteninformationen bezüglich des gewünschten Ortes von einer während der Arbeit Karteninformationen sammelnden Arbeitsmaschine, welche die Arbeit an dem gewünschten Ort beendet hat, und Bereitstellen der Karteninformationen an eine andere, an dem gewünschten Ort zu einem späteren Zeitpunkt Arbeit ausführende Arbeitsmaschine.

9. Programm, das einen Computer veranlasst, als jeweilige Einrichtung der Steuervorrichtung nach einem der Ansprüche 1 bis 7 zu arbeiten.

## Revendications

1. Dispositif de commande pour fournir un service de partage de machines de travail, comprenant :
des moyens d'acquisition de requête pour acquérir une requête de location de machine de travail qui spécifie une date et une heure souhaitées et un emplacement souhaité ;
des moyens d'acquisition de planning pour acquérir une date et une heure de travail planifiées de chacune d'une pluralité de machines de travail ;
des moyens de spécification pour spécifier une machine de travail qui peut être louée parmi la pluralité de machines de travail, sur la base au moins de la requête et de la date et de l'heure planifiées ; et
des moyens de détermination de tarif pour déterminer un tarif de location pour une période de temps spécifique sur la base d'un nombre de requêtes pendant la période de temps ; et
des moyens de fourniture pour acquérir des informations cartographiques concernant l'emplacement souhaité à partir d'une machine de travail qui collecte des informations cartographiques pendant un travail et qui a terminé le travail à l'emplacement souhaité, et fournir les informations cartographiques à une autre machine de travail qui effectue plus tard un travail à l'emplacement souhaité.

2. Dispositif de commande selon la revendication 1, dans lequel les moyens de spécification spécifient une machine de travail qui peut être louée également sur la base d'un temps requis pour le transport de machines de travail jusqu'à l'emplacement souhaité et d'un temps requis pour le travail à l'emplacement souhaité.

3. Dispositif de commande selon la revendication 1 ou 2, dans lequel, si des informations cartographiques concernant l'emplacement souhaité ne sont pas présentes, une machine de travail effectuant un travail à l'emplacement souhaité exécute un travail d'acquisition d'informations cartographiques concernant l'emplacement souhaité.

4. Dispositif de commande selon l'une quelconque des revendications 1 à 3, comprenant en outre des moyens de sélection pour sélectionner, parmi les machines de travail pouvant être louées, une machine de travail pour laquelle le temps requis pour le transport jusqu'à l'emplacement souhaité est le plus court en tant que machine de travail à louer.

5. Dispositif de commande selon l'une quelconque des revendications 1 à 4, comprenant en outre des moyens de transmission pour transmettre, à un transporteur, une requête de transport d'une machine de travail jusqu'à l'emplacement souhaité.

6. Dispositif de commande selon l'une quelconque des revendications 1 à 4, comprenant en outre des moyens d'instruction pour ordonner à un véhicule à déplacement automatique de transporter une machine de travail jusqu'à l'emplacement souhaité.

7. Dispositif de commande selon la revendication 6, dans lequel les moyens de spécification spécifient une machine de travail qui peut automatiquement embarquer sur le véhicule à déplacement automatique, et descendre de celui-ci.

8. Procédé de commande pour fournir un service de partage de machines de travail, comprenant :
l'acquisition d'une requête de location de machine de travail qui spécifie une date et une heure souhaitées et un emplacement souhaité ;
l'acquisition d'une date et d'une heure de travail planifiées de chacune d'une pluralité de machines de travail ;
la stipulation d'une machine de travail pouvant être louée parmi la pluralité de machines de travail, sur la base au moins de la requête et de la date et de l'heure planifiées ; et
la détermination d'un tarif de location pour une période de temps spécifique sur la base d'un nombre de requêtes au cours de la période de temps ; et
l'acquisition d'informations cartographiques concernant l'emplacement souhaité à partir d'une machine de travail qui collecte des informations cartographiques pendant un travail et qui a terminé le travail à l'emplacement souhaité, et la fourniture des informations cartographiques à une autre machine de travail qui effectue plus tard un travail à l'emplacement souhaité.

9. Programme pour amener un ordinateur à fonctionner comme chacun des moyens du dispositif de commande selon l'une quelconque des revendications 1 à 7.
